Europäisches Patentamt

European Patent Office

Office européen des brevets

(19)

(11) Publication number : **0 326 349 B1**

(12) **EUROPEAN PATENT SPECIFICATION**

(45) Date of publication of patent specification :
30.12.92 Bulletin 92/53

(51) Int. Cl.⁵ : **B23H 1/00,** B25H 1/04,
G02B 21/34

(21) Application number : **89300689.0**

(22) Date of filing : **25.01.89**

(54) **Patterned plastic optical components.**

Divisional application 92200814.9 filed on
25/01/89.

(30) Priority : **27.01.88 US 148870**
**02.08.88 US 227131**

(43) Date of publication of application :
**02.08.89 Bulletin 89/31**

(45) Publication of the grant of the patent :
**30.12.92 Bulletin 92/53**

(84) Designated Contracting States :
**DE FR GB IT**

(56) References cited :
**EP-A- 0 034 008**
**EP-A- 0 210 071**
**EP-A- 0 217 188**
**CA-A- 1 154 614**
**DE-A- 2 640 398**
**DE-A- 2 807 443**
**GB-A- 2 127 577**
**GB-A- 2 163 866**

(56) References cited :
**US-A- 4 190 314**
**US-A- 4 299 441**
**US-A- 4 409 457**
**US-A- 4 540 152**
**PATENT ABSTRACTS OF JAPAN vol. 8, no. 65**
**(P-263)(1502), 27 th March 1984 ; & JP-**
**A-58211658 (NAIGAI KASEI K.K)**
**PATENT ABSTRACTS OF JAPAN vol. 3, no.**
**112 (M-73) ; 18 th September 1979 ; & JP-**
**A-54086 896 (INOVE JAPAX KENKYUSHO)**
**PATENT ABSTRACTS OF JAPAN vol. 8, no.**
**244 (M-337)(1681) ; 9 th November 1984 ; &**
**JP-A-59 123 629 (CANON K.K.)**

(73) Proprietor : **HYCOR BIOMEDICAL**
**7272 Chapman Avenue**
**Garden Grove California 92641 (US)**

(72) Inventor : **Mitchell, Vance C.**
**6 Hillgrass**
**Irvine California 92715 (US)**

(74) Representative : **Hallybone, Huw George et al**
**CARPMAELS AND RANSFORD 43 Bloomsbury**
**Square**
**London WC1A 2RA (GB)**

EP 0 326 349 B1

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Jouve, 18, rue Saint-Denis, 75001 PARIS

## Description

This invention relates to a transparent plastic slide according to the preamble of claim 1. Such a slide is known from US-A-4 637 693 (equivalent of EP-A-210 071.

## BACKGROUND OF THE INVENTION

Biological fluids, such as blood, spinal fluid, cell cultures and urine, are frequently examined microscopically to determine the presence or concentration of suspended particulate matter. For many years, a drop of the liquid specimen was first placed on a flat transparent microscope slide. A thin flat transparent cover slip was then placed over the specimen. More recently unitary plastic slides as shown in U.S. patent 4,637,693 have become available. Such unitary slides include at least one examination chamber formed between integral base and cover plates. A liquid specimen is drawn by capillation into the chamber from a drop placed adjacent thereto.

To accurately determine the concentration of suspended particles or cells in a liquid specimen, several parameters must be either measured or maintained at constant values. These parameters include the interior dimensions which determine the volume of the examination chamber and the volume of fluid from which the sample is taken. In urinalysis procedures the sample is taken at a standard volume of 12 ml. The 12 ml. sample is centrifuged and 11 ml. are decanted. The sediment is resuspended in the remaining 1 ml. to provide a 12 to 1 concentration of the particulate. This procedure is facilitated by use of the pipette described in Mitchell U.S. Patent 4,563,332.

Unitary plastic slides as described in U.S. Patent 4,637,693 have examination chamber roofs spaced a predetermined distance from the chamber floors. With such slides the only remaining dimension required to determine the volume of specimen liquid under examination is the lateral dimension of the field of view of the examining instrument, e.g. a microscope. This lateral dimension varies depending on magnification and the optics used in the instrument. Therefore, standardization requires either that all microscopes or the like have the same field of view or that the differences in fields of view must be calculated and factored into the various counts of suspended particular matter.

Pursuant to this invention, there is provided a transparent plastic slide having a plurality of chambers for microscopic examination of a sample of a biological fluid such as urine, blood or spinal fluid,

each of said chambers having a flat optically smooth floor,

at least one of said chambers having a pattern to facilitate accurate counting, at a magnification of from about 10 times to about 1500 times of particles present in said biological fluid sample,

said pattern comprising markings, characterized by

said pattern markings consisting essentially of symmetrical lines having a width of from about 0.005 mm to about 0.05 mm, and by

said lines extending upwardly from the floor of said at least one chamber.

The grid pattern may be provided on the examination chamber floor of a slide which is utilized with a separate cover slip or of unitary slide having a permanently affixed cover plate as shown for example in U.S. Patent 4,637,693.

The grid must either be machined or scribed onto the chamber floor after the slide is molded or formed from a pattern incorporated into the mold.

Many applications, e.g., urinalysis procedures, require magnification of the order of 400 times. At this magnification the diameter of the fields of view vary from about 0.33 millimeters (mm) to 0.50 mm. Grid systems with narrow defining lines, e.g., 0.025 mm in width, separated by less than half a millimeter are required. Otherwise, portions of the grid perimeter will extend beyond the field of view requiring adjustments to the microscope or other magnification instrument, thus effectively defeating the purpose of the grid.

Pursuant to this invention fine patterns such as grids are provided on plastic optical components, specifically urinalysis slides, for use at magnification of from about 10x to about 1500x. A magnification range of from about 350x to about 450x is appropriate for most purposes. Pattern line widths of from about .005 to about .05 mm and pattern line spacings of from about .06 mm to about 9 mm accommodate such magnification ranges.

## DESIGN AND PRODUCTION OF MOLD INSERTS

Hitherto, efforts to provide fine line widths on metal mold parts for use in the production of plastic optical components such as urinalysis slides have not been successful. For example, minimum line widths of only about 0.076 to 0.13 mm have been achieved using milling or grinding machine techniques.

It has now been found that electrical discharge machining techniques provide marking for a grid system on metal mold inserts useful to make the examination chamber floor surfaces on plastic slide bases and other kinds of plastic optical components. Such plastic slide bases normally have multiple examination chamber floor surfaces. Each floor surface must have an optical quality finish. Hence, the portions of the molds, i.e., the "mold inserts", on which examination floor surfaces are formed must also have an optical quality finish. Conventionally, stainless steel, free of pits and voids, polished to an optical quality or mirror finish is employed. To provide a grid system on examination'floor surfaces material must be removed or added to the polished mold surface in an appropriate pattern of lines.

There is now briefly described an electrical discharge machining method for precisely removing material from polished metal mold face surfaces to provide fine line patterns, e.g., patterns with line widths of about 0.012 to about 0.023 mm.

The electrical discharge machining method entails submerging a grounded metal mold insert in a non-conductive fluid adjacent an electrode conforming to a pattern to be eroded into the mold insert. When the electrical potential between the grounded mold insert and electrode reaches the break down potential, an arc is formed with erodes both the surface of the mold insert to be machined and that of the electrode. The depth of the mold insert erosion is a function of the spacing between the insert surface and the electrode and of the applied electrical potential. The width of the lines eroded into the mold surface depends on the width of the corresponding electrode elements and the potential between the mold insert and the electrode. For example, using standard electrical discharge machining equipment with an electrode 0.013 mm thick results in eroded lines having widths between 0.025 to 0.036 mm on the mold insert face.

Thin electrodes are essential to provide the requisite narrow eroded line widths on the mold insert. Such electrodes, as an incident of arcing or for other reasons, may bend thus producing unacceptable wavy lines. A set of parallel electrodes which do not bend can be used to simultaneously erode a parallel set of lines for a grid system. Rotation of ninety degrees between a mold insert and the electrode permits erosion of a second set of grid system lines.

Tungsten is the electrode material of choice because of its very high melting point, high conductivity and relatively high strength as compared to copper or silver. However, tungsten is not practically available in a form from which electrodes can be made efficiently due, inter alia, to difficulties in machining. For this practical reason, electrodes are preferably formed from sintered copper-tungsten matrix containing about 30% copper.

A block of tungsten or of sintered copper-tungsten matrix is machined to provide a raised platform with a flat top. With the tungsten or sintered copper-tungsten matrix arranged as the grounded work piece, a commercially available electrical discharge machine may be used. Such machines pass a single wire electrode continuously between two spindles operated by independent microprocessors controlled servomotors. In repeated passages the wire electrode erodes material from the raised platform to form parallel raised electrodes on the block. In this way, each block electrode can, for example, be made 0.013 mm wide and 0.051 mm high and be spaced 0.33 mm from an adjacent block electrode so that a pattern of 0.33 mm square markings can be provided to define the grid system on a mold insert.

BRIEF DESCRIPTION OF THE DRAWINGS

Figure 1 is an exploded view of a plastic slide base and cover which, when assembled, has ten examination chambers.

Figure 2 is a top plan view of an assembled unitary slide with a grid system formed by use of mold inserts eroded by the method described above.

Figure 3 is a top plan view of one kind of a grid system which can be formed on slides as shown in Figure 2.

Figure 4 is a perspective view of an electrode assembly block from which the electrodes are made.

Figure 5 is a perspective view of an optical quality mold insert on which a grid system has been eroded.

Figure 6 is a perspective view of the raised platform on the electrode assembly block shown in Figure 4 showing formed electrodes.

Corresponding components are designated by the same reference numerals throughout the various figures.

DETAILED DESCRIPTION OF THE INVENTION

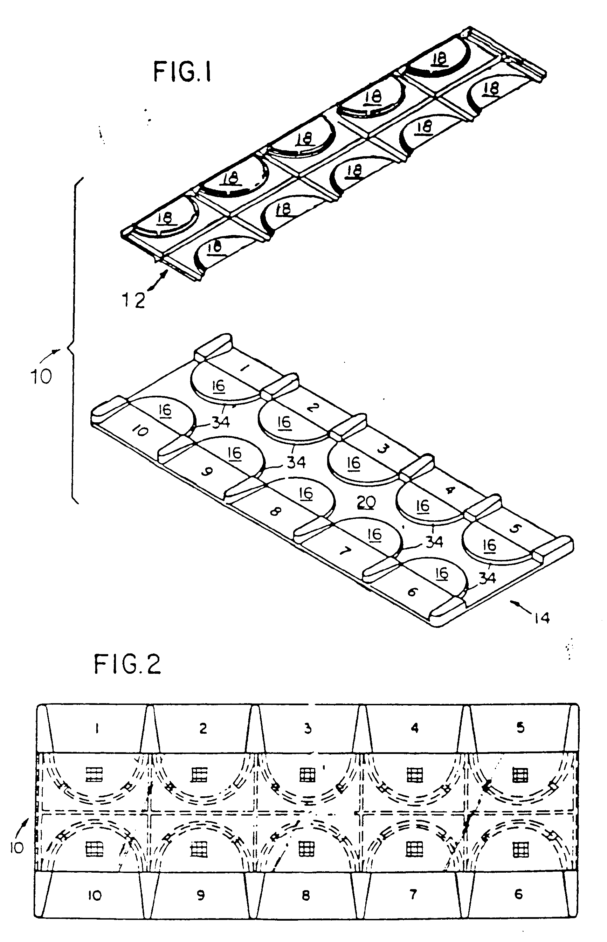

An exploded perspective view of a slide on which a grid can be formed according to the present invention is illustrated in Figure 1 where the slide is generally designated by reference numeral 10. The slide 10 includes a plastic cover plate 12 and a plastic base plate 14. A top plan view of an assembled slide 10 is shown in Figure 2. One form of this unitary type of slide is described in patent 4,637,693.

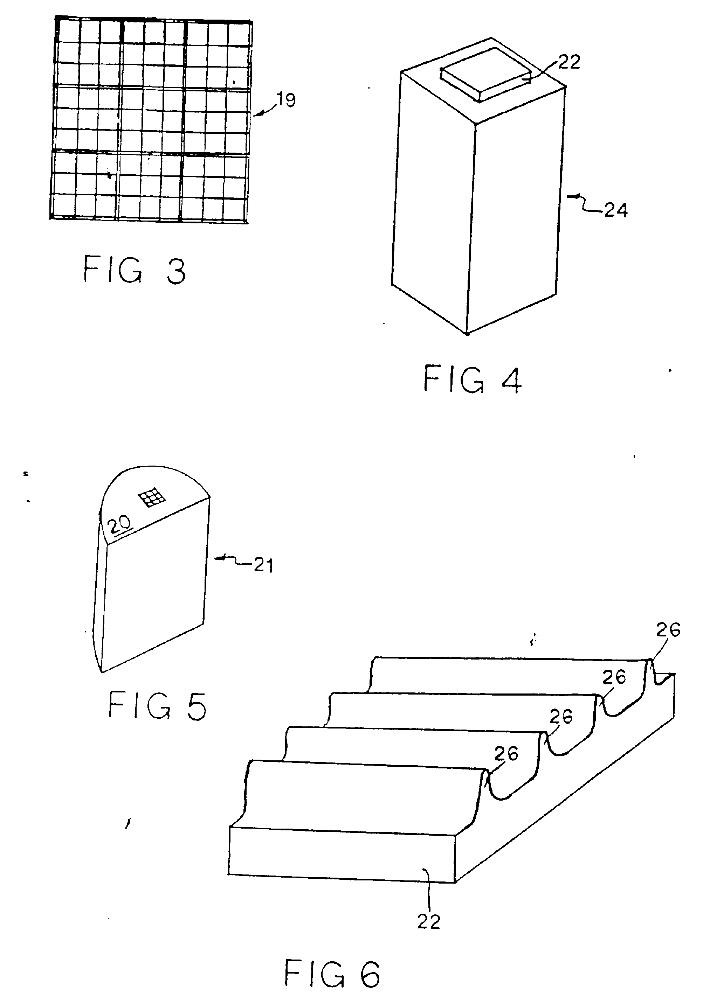

The plastic base plate 14 for the slide 10 includes flat, optically smooth examination chamber floor surfaces 16. The plastic cover plate 12 has examination chamber roof surfaces 18, which like the examination chamber floor surfaces 16, are flat and optically smooth. The mold inserts used to form the examination chamber roof surfaces 18 and floor surfaces 16 are preferably made of optical quality stainless steel or other metal and polished to mirror finishes. The desired grid pattern is provided by erosion of the polished mirror surfaces 20 (see Figure 5) of the mold inserts 21 used to form the examination chamber floor surfaces 16. The erosion is accomplished by electrical discharge machining. An electrode to erode straight lines which are narrow and not excessively deep is used. Control of the depth of erosion is accomplished by adjustment of the applied voltage and current and of the distance maintained between the electrode and the polished surfaces 20. The width of the line is dependent on the applied voltage and current and also on the width of the electrode.

As the electrode is narrowed, its strength and resistance to bending are reduced. Accordingly, electrodes for use in this invention are made from a strong, high melting point, electrically conductive material.

As shown in Figure 4, an electrode assembly, generally designated as 24 is machined using known machine shop equipment such as grinders to provide at one end a raised pedestal 22 with a smooth flat surface on which a pattern of electrodes 26 is formed by wire electrical discharge machining. See Figure 6. To form the electrodes 26, the electrode assembly 24 is immersed in deionized water and an electrical potential of 40 volts with a current of 0.4 amperes is supplied between a wire running parallel to the electrodes 26 to be formed on the surface of the electrode assembly 24.

The dimensions of the electrodes are chosen to provide pattern lines of desired dimension. For example, electrodes 0.013 mm wide by 0.051 mm high and approximately 1 mm long spaced 0.33 mm apart may be used to provide mold insert grid patterns appropriate for urinalysis slides.

An electrode assembly 24 may be used to produce all of the lines in the grid pattern shown in Figure 3 except the double paired lines. The double paired lines may, for example, be spaced 0.038 mm apart. Electrodes 26 cannot be formed on one electrode assembly 24 at such a narrow spacing because the wire electrical discharge machining uses a 0.102 mm diameter wire with a 0.25 mm spark gap around the wire which mandates a minimum spacing between electrodes 26 of 0.152 mm. To make the double paired lines, a second electrode assembly 24 is made with electrodes 26 for only the second line of each pair. The width, height and length of each electrode 26 on the second electrode assembly 24 may be the same as those of the electrodes 26 on the first electrode assembly 24.

Either electrode assembly 24 may be first used to form the grid pattern on the polished metal surface 20 of a mold insert 21. The mold insert bearing a polished metal surface 20 is mounted as the grounded part in a bath of non-conductive, high flash point oil. One of the electrode assemblies 24 is mounted above the mold insert to be lowered to the correct location to erode the desired pattern of lines on the polished metal surface 20. To erode the pattern of lines, a 50 volt and 0.2 ampere electrical signal is typically applied between the grounded polished metal surface 20 and the electrode assembly 24. This system permits erosion of lines 0.012 to 0.023 mm wide and 0.008 mm deep. Lines of different dimensions are similarly provided by appropriately dimensioned electrode assemblies.

The copper tungsten sintered material preferred in present practice for electrode conduction is formed by compressing fine particles of copper and tungsten at high pressure. The copper particles are quite visible at 30X magnification. It appears that the copper melted out during the machining process with the consequent production of a substantial number of voids in the desired pattern lines. Missing or jagged spots appear along the top of each electrode "tooth". Such spots are generally from about 0.013 mm to 0.051 mm in width. The number of such voids vary because the copper-tungsten mixture is not homogeneous.

To eliminate such interruptions and gaps, the electrode assembly 24, after eroding a set of parallel lines, is slightly shifted laterally by, e.g., 0.1 mm with respect to the grounded polished metal surface 20 and again applied to erode the same lines. After the second use of the electrode assembly 24, the electrode assembly 24 is rotated ninety degrees with respect to the eroded parallel lines and a second set of perpendicular lines is eroded. This second set of lines is also eroded twice to assure elimination of interruption and gaps.

At this point, the electrode assembly 24 is changed and a second electrode assembly (not shown) is used for the final erosion of lines on the polished metal surface 20 following the same steps as were used with the first electrode assembly 24.

Upon completion of erosion of grid patterns on polished metal surfaces 20 for the necessary number of mold inserts 21 for a mold to make slide bases, the mold can be assembled and slide made using optical quality clear plastic. The resulting grid patterns on examination chamber floor surfaces 16 may have lines as narrow as 0.012 mm or about 15 microns wide. Such lines are distinct but not over-proportioned in comparison to, for example, red blood cells which are 5-10 microns in diameter. The height of the lines may only be only 0.008 mm to avoid the problem of particulate matter such as cells being strained out by the grid pattern when the liquid specimen is drawn into an examination chamber.

The quality of the edges of the lines is another benefit. The edges of the lines of the grid pattern 19 made on the examination chamber floor surfaces 16 by the method of the present invention are sharp and distinct. These qualities aid in identification of objects on and adjacent the lines. In combination, the width, height and distinct edges of the lines sets out areas where, after a liquid specimen is injected in an examination chamber, particulate matter can settle so accurate count can be made. That particulate matter settling about a line will settle on one side or the other with a 50-50 probability because of the symmetric shape of the lines.

Although the invention has been specifically illustrated by an embodiment, various modifications and additions are encompassed by the invention as set out in the claims.

## Claims

1. A transparent plastic slide (10) having a plurality of chambers for microscopic examination of a sample of a biological fluid such as urine, blood or spinal fluid,

each of said chambers having a flat optically smooth floor (16),

at least one of said chambers having a pattern (19) to facilitate accurate counting, at a magnification of from about 10 times to about 1500 times of particles present in said biological fluid sample,

said pattern (19) comprising markings characterized by

said pattern markings consisting essentially of symmetrical lines having a width of from about 0.005 mm to about 0.05 mm, and by

said lines extending upwardly from the floor (16) of said at least one chamber.

2. A slide as defined in Claim 1 in which the pattern (19) is a grid pattern comprising a plurality of markings defining quadrangles.

3. A slide as defined in Claim 2 in which the markings define squares.

4. A slide as defined by Claim 2 in which the markings define 0.33 mm squares.

5. A slide as defined by any preceding Claim in which the lines are 0.008 mm high.

6. A slide as defined by any preceding Claim in which the lines are sharply defined and substantially free of interruptions.

7. Use of a slide as defined in any preceding Claim together with a magnification instrument having a magnification in the range 10 to 1500 and a field of view at that magnification large enough to contain the perimeter of at least one grid quadrangle, in the examination of a human biological fluid specimen.

8. Use according to Claim 7 in which the magnification of the instrument is 400 and the markings on the slide define 0.33 mm squares.

**Patentansprüche**

1. Transparenter Kunststoff-Objektträger (10) mit einer Mehrzahl von Kammern zur mikroskopischen Untersuchung einer Probe einer biologischen Flüssigkeit, wie Urin, Blut oder Rückenmarksflüssigkeit,

wobei jede dieser Kammern einen flachen optischen glatten Boden (16) hat,

wenigstens eine der Kammern ein Muster (19) hat, um das genaue Zählen von Teilchen, die in der Probe dieser biologischen Flüssigkeit vorliegen, bei einer Vergrößerung von etwa 10-mal bis etwa 1500-mal, zu erleichtern,

und dieses Muster (19) Markierungen umfaßt,

**dadurch gekennzeichnet,**

daß diese Mustermarkierungen im wesentlichen aus symmetrischen Linien mit einer Breite von etwa 0,005 mm bis etwa 0,05 mm bestehen, und

daß sich diese Linien nach oben vom Boden (16) dieser wenigstens einen Kammer erstrecken.

2. Objektträger nach Anspruch 1, dadurch gekennzeichnet, daß das Muster (19) ein Gittermuster ist, das eine Mehrzahl von Markierungen umfaßt, die Vierecke umgrenzen.

3. Objektträger nach Anspruch 2, dadurch gekennzeichnet, daß die Markierungen Quadrate definieren.

4. Objektträger nach Anspruch 2, dadurch gekennzeichnet, daß die Markierungen Quadrate von 0,33 mm definieren.

5. Objektträger nach einem der vorhergehenden Ansprüche, dadurch gekennzeichnet, daß die Linien 0,008 mm hoch sind.

6. Objektträger nach einem der vorhergehenden Ansprüche, dadurch gekennzeichnet, daß die Linien scharf definiert und praktisch frei von Unterbrechungen sind.

7. Verwendung eines Objektträgers nach einem der vorhergehenden Ansprüche zusammen mit einem Vergrößerungsinstrument mit einer Vergrößerung im Bereich von 10 bis 1500 und einem Betrachtungsfeld bei dieser Vergrößerung, das groß genug ist, um den Umfang wenigstens eines Gittervierecks zu umfassen, zur Prüfung einer menschlichen biologischen Flüssigkeitsprobe.

8. Verwendung nach Anspruch 7, dadurch gekennzeichnet, daß die Vergrößerung des Instruments 400-fach ist und die Markierungen auf dem Objektträger Quadrate von 0,33 mm definieren.

**Revendications**

1. Une lame transparente en matière plastique (10) comprenant une pluralité de chambres pour l'examen microscopique d'un échantillon d'un fluide biologique tel que l'urine, le sang ou le liquide céphalorachidien spinal,

chacune desdites chambres ou alvéoles comprenant un fond lisse, optiquement plat (16),

au moins l'une desdites chambres comprenant un motif (19) pour faciliter le comptage précis, sous un grossissement d'environ 10 fois à environ 1500 fois, de particules présentes dans ledit échantillon de fluide biologique,

ledit réseau (19) comprenant des marquages, caractérisés en ce que

lesdits marquages de motif consistent essentiellement en des lignes symétriques d'une largeur d'environ 0,005 mm à environ 0,05 mm, et que

lesdites lignes sont dirigées vers le haut à partir du fond (16) d'au moins une desdites chambres.

2. Une lame comme définie dans la revendication 1, dans laquelle le motif (19) est un motif en forme de grille comprenant une pluralité de marquages définissant des quadrilatères.

3. Une lame comme définie dans la revendication 2, dans laquelle les marquages définissent des carrés.

4. Une lame comme définie dans la revendication 2, dans laquelle les marquages définissent des carrés de 0,33 mm.

5. Une lame comme définie dans l'une quelconque des précédentes revendications, dans laquelle les lignes ont une hauteur de 0,008 mm.

6. Une lame comme définie dans l'une quelconque des précédentes revendications, dans laquelle les lignes sont nettement définies et sensiblement exemptes d'interruptions.

7. Utilisation d'une lame comme définie dans l'une quelconque des précédentes revendications avec un appareil grossissant ayant un grossissement dans la gamme de x10 à x 1500 fois et un champ de vision sous ce grossissement suffisamment grand pour contenir le périmètre d'au moins un quadrilatère de grille, lors de l'examen d'un échantillon de fluide biologique humain.

8. Utilisation comme définie dans la revendication 7, dans laquelle le grossissement de l'appareil est de x400 fois et les marquages sur la lame définissent des carrés de 0,33 mm.

FIG.1

FIG.2

FIG 3

FIG 4

FIG 5

FIG 6